# EUROPÄISCHE PATENTSCHRIFT

(11) **EP 1 593 875 B1**
(45) Veröffentlichungstag und Bekanntmachung des Hinweises auf die Patenterteilung: **10.08.2011**
(21) Anmeldenummer: 05008945.7
(22) Anmeldetag: 23.04.2005
(51) Int. Cl.: F16G 1/08, F16G 5/06

(54) **Kraftübertragungsriemen**
Driving belt
Courroie de transmission

(30) Priorität: 03.05.2004 DE 102004021522
(43) Veröffentlichungstag der Anmeldung: 09.11.2005
(73) Patentinhaber: Arntz Beteiligungs GmbH & Co. KG, 37671 Höxter (DE)
(72) Erfinder: Ollenborger, Willi, 37639 Bevern (DE)
(74) Vertreter: Sroka, Peter-Christian

(56) Entgegenhaltungen:
- EP-A- 1 396 659
- DE-A1- 10 016 351
- US-A- 5 904 630
- US-A1- 2004 048 708

## Beschreibung

Die Erfindung betrifft gemäß dem Oberbegriff des Patentanspruchs ein Verfahren zur Herstellung eines Keilrippenriemens.

Ein derartiges Verfahren und ein nach diesem Verfahren hergestellter Keilrippienriemen sind bekannt aus der US2004/048708 A1. Diesem bekannten Verfahren liegt die Aufgabe zugrunde, neben einem verbesserten Geräuschverhalten und einer verbesserten dynamischen Belastbarkeit auch eine verbesserte Verschleißbeständigkeit des Keilrippenriemens zu erzielen. Zu diesem Zweck soll die äußere fasergefüllte Grundkörper- bzw. Beschichtungsfolie eine maximale Dicke von 0,25 mm - vorzugsweise zwischen 0,18 bis 0,22 mm - haben, um negative Effekte bei der Ausformung des Rippenprofils zu vermeiden, die aufgrund des fasergefüllten Gemischs und der damit begrenzten Fließfähigkeit des fasergefüllten Gemischs auftreten können. Die äußere, fasergefüllte Beschichtung soll zusätzlich neben den Fasern in Kombination damit Fluorpolymerpulver und/oder Pulver eines Nichteisenmetalls enthalten. Vorteilhaft bei diesem bekannten Keilrippenriemen ist es, dass der Faseranteil der oftmals teuren Faser dadurch reduziert ist, dass die Fasern nur in den zweiten äußeren Grundkörper- bzw. Beschichtungsabschnitt des Riemens eingemischt sind.

Der Erfindung liegt die Aufgabe zugrunde, ein Verfahren zur Herstellung eines Keilrippenriemens so zu gestalten, dass bei geringstmöglichem Faserverbrauch die Herstellung des Riemens vereinfacht wird.

Zur Lösung dieser Aufgabe kennzeichnet sich das erfindungsgemäße Verfahren durch das Lösungsmerkmal gemäß dem Kennzeichen des Patentanspruchs 1 aus, wodurch auch die Abriebfestigkeit und damit die Lebensdauer des Keilrippenriemens erhöht wird.

Die Rippen des nach dem Formverfahren hergestellten Riemens können anschließend noch oberflächlich angeschliffen oder angerauht werden, wie es beispielsweise in der DE 100 16 351 A1 oder in der US 5,904,630 vorgeschlagen ist, um die in der Mischung verteilten Fasern herauszuarbeiten und eine Oberfläche mit textilem Charakter, z.B. an der Oberfläche liegenden Fasern zu erhalten.

Als Fasermaterialien werden vorzugsweise die üblichen, z. B. in der DE 100 16 351 A1 genannten Fasern, wie z. B. Baumwolle und Viskose, und daraus abgeleitete Mischungen, Polyester, Polyamide wie z. B. Nylon oder Aramide unterschiedlicher Ausprägungen, verwendet.

Der Riemenrücken besteht vorzugsweise aus einem Gewebe, einem Quercord und/oder einer vorzugsweise faserverstärkten Gummimischung z.B. auf der Basis von Polybutadien (BR), Polychloropren-Kautschuk (CR), elastomerem Co-Polymer aus Styrol und Butadien (SBR), Acryl-Nitril-Butadien-Kautschuk (NBR), hydriertem Acrylnitril-Butadien-Kautschuk (HNBR), alkyliertem, chlorsulfoniertem Polyethylen (ACSM), Ethylen-Propylen-Kautschuk (EPM) oder vorzugsweise Ethylen/Propylen-Dien-Terpolymer-Kautschuk (EPDM). Die Zugträger bestehen vorzugsweise aus Polyamiden, Polyestern, Aramiden oder Glas oder anderen zugfesten Materialien.

Der Grundkörper besteht vorzugsweise aus den gleichen Elastomeren, wie sie oben in Verbindung mit dem Riemenrücken angegeben sind.

Die Riemeneigenschaften können beeinflusst werden durch unterschiedliche Elastomermaterialien für den Riemenrücken und die beiden Abschnitte des Grundkörpers, die Dicke der Einzelabschnitte, unterschiedliche Beschleunigersysteme für die Elastomere und/oder durch das Einbringen unterschiedlicher, für die jeweiligen Zwecke geeigneter Zuschlagstoffe.

Mit erhöhtem Aufwand können die Riemeneigenschaften auch noch dadurch verbessert werden, dass zusätzlich auf die bewegungsübertragenden Oberflächenbereiche Materialien aufgebracht werden, z. B. eine zusätzliche Beflockung mittels geeigneter Fasern oder von sonstigen Substanzen, z. B. Gleitmitteln oder dergleichen.

Die Erfindung wird im folgenden anhand der Zeichnung näher beschrieben.
Figur 1 zeigt im Querschnitt den Aufbau eines Riemenrohlings.
Figur 2 zeigt im Querschnitt den Aufbau eines Rippenkeilriemens nach dem Formprozess und dem Ausvulkanisieren.

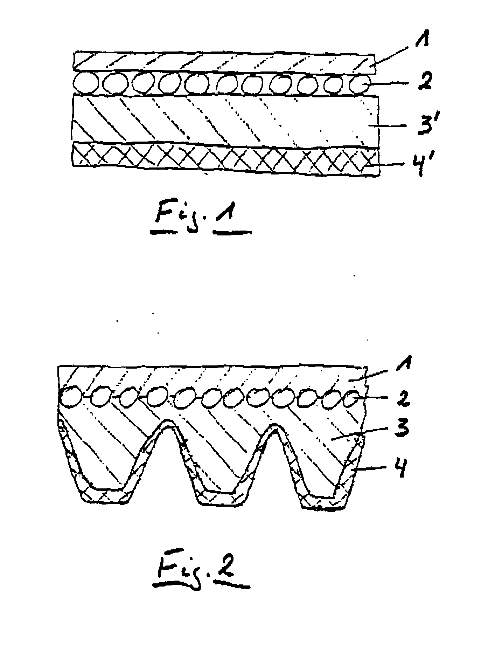

Gemäß Figur 1 besteht der Riemenrohling aus einem Riemenrücken 1, einer Zugträgerlage 2, einer ersten faserfreien Grundkörperfolie 3' und einer zweiten fasergefüllten Grundkörperfolie 4' mit darin eingemischten, in der Regel relativ kurzen Fasern, z.B. Aramidfasern oder dergleichen.

Entsprechend dem für die Herstellung von Keilrippenriemen bekannten Formverfahren werden während des Formgebungs- und Vulkanisationsvorganges die Rippen in die im Wesentlichen glatte Oberfläche des Riemenrohlings eingeprägt. Die Schichtdicke des "fasergefüllten" zweiten Grundkörperabschnitts 4 nimmt bedingt durch den Formgebungsprozess von der Rippenspitze zum Rippengrund in Abhängigkeit von dem Abstand zwischen Rippenspitze und Rippengrund beispielsweise um ca. 50 % ab. Da beim Betrieb eines Keilrippenriemens der Abrieb an der Rippenspitze besonders stark ist, ist die größere Dicke des zweiten fasergefüllten Grundkörperabschnitts 4 im Bereich der Rippenspitze vorteilhaft.

Bei dem in Figur 1 dargestellten Riemenrohling sind, wie dargestellt, die Dicken der Grundkörperfolien 3' und 4' unterschiedlich, wobei die Dicke der faserfreien Grundkörperfolie 3' bevorzugt das 1,5- bis 3-fache der Dicke der fasergefüllten Grundkörperfolie 4' ausmacht. Erfindungsgemäβ beträgt bei einer 1,55 mm dicken, faserfreien Grundkörperfolie 3' die Dicke der fasergefüllten Grundkörperfolie 4' ca. 0,65 mm.

Die Viskosität und Dicken der beiden Grundkörperfolien 3' und 4' müssen so aufeinander abgestimmt sein, dass eine geschlossene und hinreichend dicke Oberfläche der Fasermischung während des Formprozesses gewährleistet ist.

## Patentansprüche

1. Verfahren zur Herstellung eines Keilrippenriemens, bestehend aus
- einem Riemenrücken (1), -einem Grundkörper (3,4) aus ausvulkanisiertem Kautschuk oder kautschukähnlichem Material,
- einer zwischen dem Riemenrücken (1) und dem Grundkörper (3,4) eingebetteten Zugträgerlage (2), wobei der Grundkörper (3,4) aus einem ersten faserfreien und an den Riemenrücken anvulkanisierten Grundkörperabschnitt (3) und einem an den ersten Grundkörperabschnitt (3) anvulkanisierten zweiten Abschnitt (4), in den Fasern eingemischt sind, aufgebant ist, derart, dass der Grundkörper (3, 4) im Wesentlichen nur in seinen bewegungsübertragenden Oberflächenbereichen mit Fasern ausgerüstet ist, wobei man einen Riemenrohling durch Übereinanderschichten des Riemenrückens (1), der Zugträgerlage (2), einer ersten faserfreien Grundkörperfolie (3') zur Bildung des ersten Abschnitts(3) und einer zweiten fasergefüllten Grundkörperfolie (4') zur Bildung des zweiten Abschnitts (4) herstellt, und in diesen Riemenrohling entsprechend dem sogenannten Formverfahren die Rippeniemen einprägt,
**dadurch gekennzeichnet, dass** man zur Bildung des fasergefüllten Abschnitts (4) eine fasergefüllte Grundkörperfolie (4') mit einer Dicke im Bereich von ca. 0,65 mm und zur Bildung des ersten faserfreien Grundkörpera Abschnitts (3) eine faserfreie Grundkörperfolie (3') mit einer Dicke von 1,55 mm verwendet und
**dadurch gekennzeichnet, dass** der Formgebungsvorgang derart durchgeführt wird, dass die Schichtdicke des zweiten Grundkörperabschnitts (4) von den Rippenspitzen zum Rippengrund abnimmt.

2. Verfahren nach Anspruch 1, **dadurch gekennzeichnet, dass** der Formgebungsvorgang derart durchgeführt wird, dass die Schichtdicke des zweiten Grandkörperabschnitts (4) von den Rippenspitzen zum Rippengrund um ca. 50% abnimmt.

## Claims

1. Method of producing a ripped V-belt comprising
- a belt back (1),
- a main body (3, 4) of vulcanized caoutchouc or a caoutchouc-like material,
- a load carrying section (2) embedded between the belt back (1) and the main body (3, 4) structured by a first fiber-free main body section (3) vulcanized on the belt back and a second section (4) vulcanized on the first main body section (3), into which second section fibers are mixed, such that the main body (3, 4) is furnished with fibers essentially only within its movement transferring surface areas, wherein a belt blank is produced by laminating on top of each other the belt back (1), the load-carrying section (2), a first fiber free main body foil (3') for the formation of the first section (3), and a second fiber filled main-body foil (4') for the formation of the second section (4) and by impressing belt rips into said belt blank using a so-called molding process,
**characterized in that** for the formation of the fiber-filled section (4) a fiber-filled main body foil (4') having a thickness in the range of approximately 0,65 mm and for the formation of the first fiber-free main-body section (3) a fiber-free main-body foil (3') having a thickness of 1,55 mm are used, and **in that** the forming operation is effected in such a way that the layer thickness of the seond main-body section (4) decreases from the tips of rips to the bases of the rips.

2. Method according to claim 1, **characterized in that** the forming operation is effected in such a way the layer thickness of the second main-body section (4) decreased from the tips of the rips to the bases of the rips by approximately 50 %.

## Revendications

1. Une méthode de production d'une courroie trapézoïdale à nervures, composée
- d'un arrière de courroie (1),
- un corps principal (3, 4) de caoutchouc vulcanisé ou d'un matériau similaire au caoutchouc vulcanisé,
- une partie porteuse de traction (2) encastrée entre l'arrière de courroie (1) et le corps principal (3, 4), le corps principal (3, 4) étant constitué d'une première partie de corps principal sans fibres (3) vulcanisée sur l'arrière de courroie et d'une seconde partie (4) vulcanisée sur la première partie de corps principal (3), dans laquelle partie (4) des fibres sont mélangées de façon à ce que le corps principal (3, 4) soit essentiellement doté de fibres seulement dans les régions de surface extérieure de transfert de mouvement de celui-ci, dans laquelle methode une courroie brute est produite en disposant l'un sur l'autre consécutivement l'arrière de courroie (1), la partie porteuse de traction (2), un premier film de corps principal sans fibre (3') pour former la première partie (3) et un second film de corps principal chargé des fibres (4') pour former la seconde partie (4) et l'imprimer des nervures de courroie dans ladite courroie brute selon le ainsi apellé processus de moulage,
**caractérisé en ce que** pour former la partie chargé des fibres (4) un film de corps principal fibreux (4') ayant une épaisseur de l'ordre d'environ 0,65 mm est utilisé et pour former la première partie de corps principal sans fibres (3) un film de corps principal sans fibre (3') ayant une épaisseur de 1,55 mm est utilisé, et **caractérisé en ce que** le processus de moulage est réalisé de façon à ce que l'épaisseur de la couche de la seconde partie de corps principal (4) diminue de l'extrémité à la base des stries.

2. La méthode conforme à la revendication 1, **caractérisé en ce que** le processus de moulage est réalisé de façon à ce que l'épaisseur de la couche de la seconde partie de corps principal (4) diminue d'environ 50% de l'extrémité à la base des nervures.
